# EUROPÄISCHE PATENTSCHRIFT

(11) **EP 3 450 812 B1**
(45) Veröffentlichungstag und Bekanntmachung des Hinweises auf die Patenterteilung: **14.10.2020**
(21) Anmeldenummer: 18190292.5
(22) Anmeldetag: 22.08.2018
(51) Int. Cl.: F16L 37/088, F16L 59/16, F16L 39/00, F16L 59/06, F16L 47/02

(54) **LEITUNGSKUPPLUNG UND BEHÄLTER HIERMIT**
LINE COUPLING AND CONTAINER WITH SAME
ACCOUPLEMENT DE CONDUITE ET RÉCIPIENT CORRESPONDANT

(30) Priorität: 28.08.2017 DE 102017119704
(43) Veröffentlichungstag der Anmeldung: 06.03.2019
(73) Patentinhaber: NORMA Germany GmbH, 63477 Maintal (DE)
(72) Erfinder: Jacksteit, Bruno, 63546 Hammersbach (DE); Unger, Dennis, 63517 Rodenbach (DE)
(74) Vertreter: Patentanwälte Olbricht Buchhold Keulertz

(56) Entgegenhaltungen:
- DE-A1- 3 540 870
- DE-A1-102012 108 791
- DE-T2- 69 101 735
- DE-U1- 29 610 026
- US-A1- 2004 183 301
- US-A1- 2016 288 149

## Beschreibung

Die Erfindung betrifft eine Leitungskupplung gemäß dem Oberbegriff von Anspruch 1 und einen Behälter mit einer solchen nach Anspruch 15.

Leitungskupplungen dienen der Verbindung von Leitungen mit weiteren Leitungen oder dem Anschluss an einem Behälter und dergleichen.

Aus DE 296 10 026 U1 ist eine Steckkupplung mit einem Rohr, einem Anschlussstück, einer Dichtung und einem Klemmstück bekannt.

Aus EP 0 330 871 A1 ist eine Leitungskupplung bekannt, die ein Gehäuse aufweist, das sich aus einem Rohrstutzen und einem Gehäusekopf zusammensetzt. Ein Durchgangskanal erstreckt sich von einer ersten Öffnung, die vom Rohrstutzen ausgebildet ist, zu einer zweiten Öffnung, die vom Gehäusekopf ausgebildet ist. Außerdem ist gezeigt, wie ein Anschlussstutzen in den Gehäusekopf eingesteckt ist, wobei zwischen dem Gehäusekopf und dem Anschlussstutzen Dichtelemente angeordnet sind.

Nachteilhaft an dieser Ausgestaltung ist, dass in einen Behälter der mit dem Gehäusekopf verschlossen ist eigentlich nur Fluid einleitbar ist. Es ist jedoch keine Flüssigkeitsentnahme möglich, wenn der Behälter einen Füllstand aufweist, der unterhalb des Gehäusekopfs liegt. Aufgabe der Erfindung ist es deshalb, eine Leitungskupplung zu entwickeln, welche die Nachteile des Standes der Technik überwindet und dazu geeignet ist, eine Behälteröffnung mit dem Gehäusekopf zu verschließen und auch eine Fluidentnahme aus dem Behälter zu ermöglichen, wenn der Füllstand unterhalb des Gehäusekopfs liegt. Die Lösung soll einfach, kostengünstig und möglichst flexibel hinsichtlich des Einsatzortes sein.

Die Aufgabe wird durch eine Leitungskupplung nach Anspruch 1 sowie durch einen Behälter nach dem abhängigen Anspruch 15 gelöst. Optionale Ausgestaltungen sind Gegenstand der Ansprüche 2 bis 14 und 16 bis 19 sowie der nachstehenden Beschreibung.

Die Erfindung betrifft eine Leitungskupplung mit einem Gehäuse, das einen Rohrstutzen und einen Gehäusekopf aufweist, wobei sich ein Durchgangskanal von einer ersten Öffnung, die vom Rohrstutzen ausgebildet ist, zu einer zweiten Öffnung, die vom Gehäusekopf ausgebildet ist, erstreckt. Im Durchgangskanal ist eine Rohranschlussstruktur angeordnet, wobei die Rohranschlussstruktur über erste Koppelmittel formschlüssig mit einem ersten Ende eines Innenrohrs verbunden ist, das sich durch die zweite Öffnung aus dem Gehäusekopf heraus erstreckt, und wobei der Abschnitt des Durchgangskanals, der zwischen der ersten Öffnung und der Rohranschlussstruktur liegt, sowie das Innenrohr einen Strömungskanal für Fluid ausbilden.

Vorteilhaft an dieser Ausgestaltung ist, dass das Innenrohr bis in einen Bereich unterhalb des Füllstandes in einem Behälter ragen kann. Hierdurch kann Fluid auch bei geringen Füllständen entnommen werden. Durch die Rohranschlussstruktur ist je nach Anwendungsfall ein Innenrohr mit Wunschlänge einsetzbar. Die weiteren Bauteile der Leitungskupplungen können auch bei unterschiedlichen Entnahmetiefen genutzt werden. Hierdurch sind die Herstell- und Lagerkosten aufgrund von hohen Stückzahlen von wenigen Einzelteilen gering. Der eigentliche Strömungskanal wird also ausgehend von der Rohranschlussstruktur in Richtung der zweiten Öffnung bevorzugt vom Innenrohr ausgebildet. Die Rohranschlussstruktur und der Rohrstutzen setzen vorzugsweise den Strömungskanal in Richtung der ersten Öffnung fort.

Aus Kostengründen und für eine hohe Betriebssicherheit wird erfindungsgemäß das Gehäuse einteilig hergestellt. Außerdem ist erfindungsgemäß die Querschnittsfläche der zweiten Öffnung um ein mehrfaches, wenigstens das Zweifache, größer als die Querschnittsfläche der ersten Öffnung.

In einer besonderen Ausführungsform der Leitungskupplung bilden die ersten Koppelmittel eine Steckverbindung aus. Diese ist einfach montierbar und kann optional auch demontierbar ausgestaltet sein. Vorzugsweise ragt die Rohranschlussstruktur in das Innenrohr. Damit kann das Innenrohr einen größeren Leitungsquerschnitt aufweisen. In einer näheren Ausgestaltung weist die Rohranschlussstruktur auf ihrer Außenseite wenigstens eine Haltenase auf, die von Innen in das Innenrohr eingreifen. Vorzugsweise handelt es sich um eine umlaufende Haltenase. Das erhöht die Dichtigkeit und Zugfestigkeit durch Erzeugung einer Radialspannung. Optional sind die ersten Koppelmittel alternativ oder zusätzlich stoffschlüssig miteinander verbunden, zum Beispiel verschweißt oder verklebt. Hierdurch wird eine besonders feste, dichte und vibrationsfeste Verbindung geschaffen.

Gemäß einer näheren Ausgestaltungsform ist die Rohranschlussstruktur hülsenförmig ausgebildet. Eine Hülse ist hohl und kann gleichzeitig einen geringen Durchmesser aufweisen, der ein kompaktes Design ermöglicht. Im Besonderen sollte die Rohranschlussstruktur einen Teilabschnitt des Strömungskanals ausbilden.

Erfindungsgemäß ist die Rohranschlussstruktur durch ein Anschlusselement ausgebildet, das formschlüssig und/oder stoffschlüssig in einem Aufnahmesitz des Gehäuses festgelegt ist. Damit kann das Anschlusselement bzw. die Rohranschlussstruktur aus einem vom Gehäuse abweichenden Material ausgebildet sein. Dieses kann insbesondere die Anforderungen der Rohranschlussstruktur erfüllen. So ist bei geringer Wandstärke eine hohe Festigkeit erzielbar und der Strömungsquerschnitt wird nur geringfügig verjüngt. Stoffschluss lässt sich durch Kleben, Schweißen und auch durch Anspritzen des Gehäuses an die Rohranschlussstruktur oder Anspritzen der Rohranschlussstruktur an das Gehäuse erzielen.

Erfindungsgemäß ist vorgesehen, dass das die Rohranschlussstruktur ausbildende Anschlusselement auf der Außenseite wenigstens zwei, vorzugweise wenigstens drei und besonders bevorzugt exakt drei zylindrische Stufen aufweist, mit denen das Anschlusselement in Stufen des Aufnahmesitzes sitzt. Durch die Stufen wird das Anschlusselement und damit die Rohranschlussstruktur bei der Montage stufenweise zentriert und die Haftreibung beim finalen Einsetzen liegt nur über einen kurzen Einschiebeweg an. Außerdem grenzen abwechselnd zylindrische Kontaktflächen und stirnseitige Kontaktflächen aneinander. Dadurch ergibt sich eine stabile Verzahnung mit dem Gehäuse bei geringer Bauhöhe. Optional ist die Rohranschlussstruktur bzw. das Anschlusselement zusätzlich stoffschlüssig mit dem Gehäuse verbunden, zum Beispiel verschweißt oder verklebt. Hierdurch wird eine besonders feste, dichte und vibrationsfeste Verbindung geschaffen. Beispielsweise eignet sich eine Ultraschallverschweißung. Der maximale Außendurchmesser des Anschlusselements ist vorzugsweise größer als der Außendurchmesser des Innenrohrs. Hierdurch können größere Drehmomente übertragen werden.

Des Weiteren ist eine Ausgestaltung zu bevorzugen, bei der die Rohranschlussstruktur einen zylindrischen Innendurchmesser aufweist, vorzugsweise mit über der Länge der Rohranschlussstruktur konstanter innerer Querschnittsfläche. Hierdurch bildet die Rohranschlussstruktur keine wesentliche Verjüngung des Strömungskanals aus. Es ist eine Auslegung derart zu bevorzugen, dass die minimale innere Querschnittsfläche der Rohranschlussstruktur im Wesentlichen der minimalen Querschnittsfläche des Durchgangskanals im Bereich zwischen der Rohranschlussstruktur und der ersten Öffnung entspricht, wobei vorzugsweise eine maximale Abweichung von 20%, weiter bevorzugt eine maximale Abweichung von 15%, und besonders bevorzugt eine maximale Abweichung von 10% zwischen den beiden Querschnittsflächen besteht. Hierdurch stellt die Rohranschlussstruktur keine wesentliche Beeinträchtigung des Strömungsquerschnitts dar.

Erfindungsgemäß ist zwischen dem Innenrohr und dem Gehäusekopf ein Ringspalt ausgebildet, der in Richtung der zweiten Öffnung offen ausgestaltet ist, insbesondere zum Einschieben eines Anschlussstutzens, zum Beispiel eines Rohres oder eines Behälteranschlussstutzens. Dieser Ringspalt ist dazu geeignet, den Gehäusekopf auf ein hülsenartiges Gegenstück aufzuschieben und das Innenrohr in dieses hülsenartige Gegenstück einzuschieben.

Weiterhin ist bei einer Variante der Leitungskupplung vorgesehen, dass das Gehäuse auf der Innenseite des Gehäusekopfs einen Dichtungssitz ausbildet, in dem ein Dichtring angeordnet ist. Damit kann der Gehäusekopf mit einem hülsenförmigen Gegenstück dicht abschließen. Bei dem Dichtring kann es sich um einen O-Dichtring handeln. Diese sind als Standardbauteile kostengünstig erhältlich und Ersatz findet sich einfach.

Für eine einfache Herstellung des Gehäuses ohne Hinterschnitte im Durchgangskanal bietet sich eine spezielle Ausführungsform an, bei welcher der Dichtring mittels eines Fixierrings, der in den Gehäusekopf des Gehäuses eingesetzt ist, in dem Dichtungssitz gehalten wird. Bevorzugt ist der Fixierring auf der Seite der zweiten Öffnung benachbart zu dem Dichtring angeordnet. Optional kann der Fixierring mit dem Gehäuse verschweißt, beispielsweise ultraschallverschweißt sein. Es sind aber auch Ausgestaltungen mit Klebeverbindung oder mit formschlüssiger Verbindung, zum Beispiel ein elastischer Sicherungsbügel oder Sprengring, möglich. Der Dichtring und/oder der Fixierring sollten jeweils beabstandet von dem Innenrohr angeordnet sein. Hierdurch verbleibt ein Ringspalt zum Einschieben eines hülsenartigen Gegenstücks.

Gemäß einer speziellen Ausführung weist das Gehäuse auf der Innenseite des Gehäusekopfs vor und/oder hinter dem Dichtungssitz wenigstens eine zylindrische Zentrierstufe auf. Damit wird der Dichtring gegenüber einem hülsenartigen Gegenstück zentriert, sodass ein einheitlicher Druck auf die Dichtung wirkt und eine einheitliche Dichtwirkung über dem Umfang zu erwarten ist.

Ferner ist in einer Ausgestaltungsoption vorgesehen, dass das Innenrohr ein zweites Ende aufweist, an dem eine Verteilerkappe angeordnet ist, welche die Strömungsrichtung im Bereich des zweiten Endes des Innenrohrs wenigstens teilweise umlenkt, vorzugsweise in mehrere Richtungen, und besonders bevorzugt mittels mehreren Austrittslöchern mit unterschiedlichen Austrittsrichtungen und/oder mittels einer Prallplatte. Hierdurch kann vermieden werden, dass beispielsweise heißes Fluid konzentriert auf einen Punkt einer Behälterwandung geleitet wird, oder auch, dass abgesetzte Schwebeteilchen vom Behälterboden angesaugt werden.

In einer speziellen Ausführung ist das zweite Ende des Innenrohrs über zweite Koppelmittel formschlüssig mit der Verteilerkappe verbunden. Dies erlaubt eine einfache Montage. In einer besonderen Ausführungsform der Leitungskupplung bilden die zweiten Koppelmittel eine Steckverbindung aus. Diese ist einfach montierbar und kann optional auch demontierbar ausgestaltet sein. Vorzugsweise ragt die Verteilerkappe in das Innenrohr. Damit kann das Innenrohr einen größeren Leitungsquerschnitt aufweisen. In einer näheren Ausgestaltung weist die der in das Innenrohr ragende Abschnitt der Verteilerkappe auf der Außenseite wenigstens eine Haltenase auf, die von Innen in das Innenrohr eingreifen. Vorzugsweise handelt es sich um eine umlaufende Haltenase. Das erhöht die Dichtigkeit und Zugfestigkeit durch Erzeugung einer Radialspannung. Optional sind die zweiten Koppelmittel alternativ oder zusätzlich stoffschlüssig miteinander verbunden, zum Beispiel verschweißt oder verklebt. Hierdurch wird eine besonders feste, dichte und vibrationsfeste Verbindung geschaffen.

Weiterhin ist in einer möglichen näheren Ausgestaltung vorgesehen, dass am Gehäuse, insbesondere im Bereich des Gehäusekopfs, Verschlussmittel zur Festlegung des Gehäusekopfs angeordnet sind. Damit lässt sich der Gehäusekopf an einem Gegenstück festlegen, insbesondere lösbar. Vorzugsweise ist das Verschlussmittel ein Sicherungsbügel oder eine Klammer.

Des Weiteren kann der Rohrstutzen optional auf seiner Außenseite ein Befestigungsprofil aufweisen, vorzugsweise ein Tannenbaumprofil oder ein Profil in der Art einer rotierten Sägezahnfunktion. Dieses Befestigungsprofil erlaubt einen festen Halt einer aufgeschobenen Leitung, eines Rohres oder eines Schlauches.

Eine kostengünstige Herstellung ist durch eine Ausgestaltung erzielbar, nach der sich der Durchgangskanal ausgehend von der Rohranschlussstruktur in Richtung der zweiten Öffnung ausschließlich aufweitet, insbesondere derart, dass ein erster Werkzeugkern aus der zweiten Öffnung herausziehbar ist.

Zu einer kostengünstigen Herstellung trägt auch ein optionales Design bei, nach dem sich der Durchgangskanal ausgehend von der Rohranschlussstruktur in Richtung der ersten Öffnung ausschließlich aufweitet, insbesondere derart, dass ein zweiter Werkzeugkern aus der ersten Öffnung herausziehbar ist.

In einer speziellen Ausführung ist zwischen der Rohranschlussstruktur und der ersten Öffnung im Durchgangskanal eine Stoßnaht ausgebildet, welche insbesondere durch eine Trennlinie zwischen dem ersten und dem zweiten Werkzeugkern ausgebildet ist.

Eine weitere Ausgestaltungsvariante ist, dass der Anschlussstutzen außenseitige wenigstens eine zylindrische Zentrierstufe, vorzugsweise wenigstens zwei, aufweist, die vorzugsweise mit einer oder mehreren zylindrischen Zentrierstufe des Gehäusekopfs wie sie vor- und nachstehend beschrieben sind korrespondiert. Damit kann die Dichtung eine über Ihren Umfang gleichmäßige Dichtwirkung erzielen.

Um beispielsweise einen flachen Aufbau des Gehäusekopfs und der angeschlossenen Leitungen oberhalb eines Behälters zu ermöglichen, bietet sich eine Ausführung an, nach der die erste Öffnung in eine andere Richtung weist als die zweite Öffnung, wobei die erste Öffnung vorzugsweise quer zur zweiten Öffnung ausgerichtet ist. Hierzu weist der Durchgangskanal vorzugsweise zwischen der Rohranschlussstruktur und der ersten Öffnung eine Richtungsänderung, vorzugsweise eine Abwinklung, auf.

Bei einem Einsatz mit heißem Fluid bietet sich eine Ausführungsvariante an, bei der das Innenrohr zumindest im Wesentlichen aus PA (Polyamid) besteht. Das Gehäuse besteht bevorzugt zumindest im Wesentlichen aus PA (Polyamid) und enthält optional Glasfasern zur Verstärkung. Vorzugsweise besteht der Fixierring zumindest im Wesentlichen aus PA (Polyamid) und enthält optional Glasfasern zur Verstärkung. Für die Rohranschlussstruktur ist ein Material bevorzugt, das zumindest im Wesentlichen aus PA (Polyamid) besteht, und optional Glasfasern zur Verstärkung enthält. Alternativ kann die Rohranschlussstruktur bzw. das Anschlusselement auch aus Metall bestehen. Das Verschlussmittel kann aus einem Kunststoff oder aus Metall bestehen. Die Verteilerkappe besteht bevorzugt aus einem PPS (Polyphenylensulfid) Werkstoff.

Die Erfindung betrifft außerdem einen Behälter mit einem Behältergehäuse, das einen Behälterhohlraum und eine Behälteröffnung ausbildet, wobei die Behälteröffnung von einem nach außen hervorstehenden Anschlussstutzen ausgebildet ist, und mit einer Leitungskupplung wie sie vor- und nachstehend beschrieben ist, wobei der Gehäusekopf der Leitungskupplung die Behälteröffnung abdeckt, und wobei das Innenrohr der Leitungskupplung durch den Anschlussstutzen des Behältergehäuses in den Behälterhohlraum hineinragt.

Der Vorteil dieser Ausgestaltung liegt darin, dass das Innenrohr bis in einen Bereich unterhalb des Füllstandes in dem Behälter ragen kann. Hierzu ist die Behälteröffnung vorzugsweise geodätisch oben am Behältergehäuse angeordnet und das Innenrohr erstreckt sich vertikal nach unten. Hierdurch kann Fluid auch bei geringen Füllständen entnommen werden. Bei dem Behälter kann es sich insbesondere um einen Ausgleichbehälter handeln. Durch die Rohranschlussstruktur ist je nach Anwendungsfall ein Innenrohr mit Wunschlänge einsetzbar. Die weiteren Bauteile der Leitungskupplung können auch bei unterschiedlichen Entnahmetiefen genutzt werden. Hierdurch sind die Herstell- und Lagerkosten aufgrund von hohen Stückzahlen von wenigen Einzelteilen gering.

In einer Ausführungsoption weist der Anschlussstutzen eine äußere zylindrische Dichtfläche auf, die vorzugsweise mit einem Dichtring der Leitungskupplung, wie er vorstehend beschrieben ist, eine Dichtung ausbildet.

Vorzugsweise ist der Gehäusekopf des Gehäuses axialfest und drehbar auf dem Anschlussstutzen festgelegt. Damit ist die Montage einfach und eine angeschlossene Leitung kann je nach Anwendungsfall des Behälters in eine Wunschrichtung ausgerichtet werden.

Gemäß einer Ausgestaltungsvariante weist der Anschlussstutzen Verschlussmittel auf, die vorzugsweise mit Verschlussmitteln des Gehäuses der Leitungskupplung, wie sie insbesondere vorstehend beschrieben sind, derart korrespondieren, dass der Gehäusekopf an dem Anschlussstutzen festgelegt ist.

Bei einer besonderen Ausführungsform ist vorgesehen, dass zwischen dem Innenrohr und dem Anschlussstutzen ein Ringspalt ausgebildet ist, wobei sich das Innenrohr und der Anschlussstutzen vorzugsweise an keiner Stelle berühren. Hierdurch kann beispielsweise heißes Fluid bis in kühleres Fluid im Behälter geleitet werden, ohne dass der Anschlussstutzen und/oder der Behälter unmittelbar der Hitze des heißen Fluides ausgesetzt sind. Der Anschlussstutzen und/oder der Behälter besteht nämlich vorzugsweise zumindest im Wesentlichen aus PP (Polypropylen). Dieses ist weniger temperaturfest als das bevorzugte Material PA (Polyamid) des Innenrohres.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht mit 90°-Teilschnitt einer Leitungskupplung und eines Anschlussstutzens; und
- Fig. 2: eine perspektivische Schnittansicht eines Behälters mit einer Leitungskupplung.

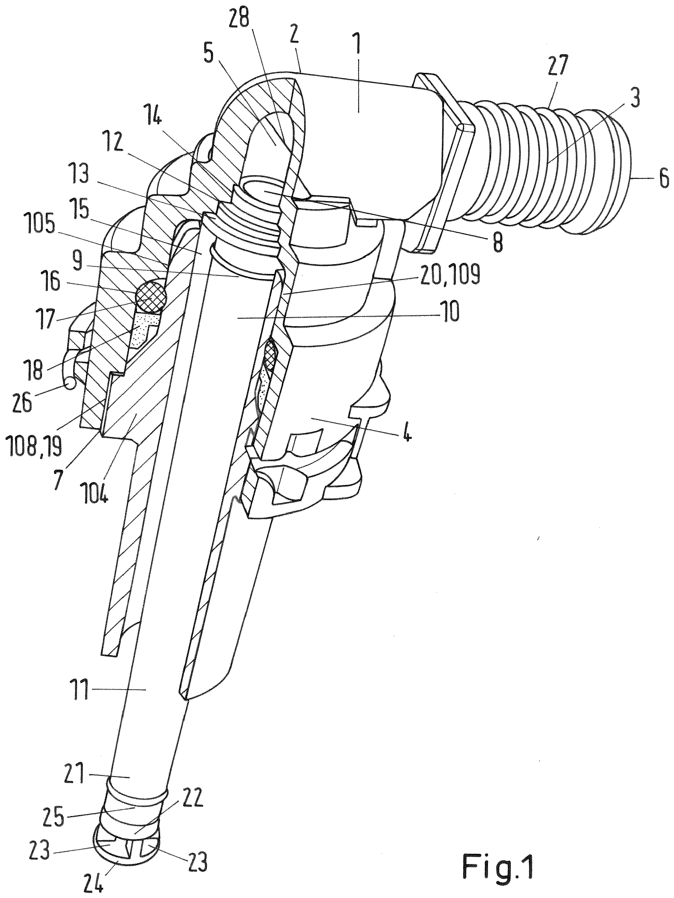

**Fig. 1** zeigt in einer perspektivischen Ansicht mit 90°-Teilschnitt eine Leitungskupplung 1 und einen Anschlussstutzen 104. Hauptelement der Leitungskupplung 1 ist ein einteiliges Gehäuse 2, das einen Rohrstutzen 3 und einen Gehäusekopf 4 aufweist. Ein Durchgangskanal 5 erstreckt sich von einer ersten Öffnung 6 des Gehäuses 2, die vom Rohrstutzen 3 ausgebildet ist, zu einer zweiten Öffnung 7 des Gehäuses 2, die vom Gehäusekopf 4 ausgebildet ist. Die Querschnittsfläche der zweiten Öffnung 7 ist um ein mehrfaches größer als die Querschnittsfläche der ersten Öffnung 6. Der Rohrstutzen 3 hat auf seiner Außenseite ein Befestigungsprofil 27, das als Tannenbaumprofil oder als ein Profil in der Art einer rotierten Sägezahnfunktion umschrieben werden kann. Auf den Rohrstutzen 3 kann eine Leitung, z.B. ein Rohr oder ein Schlauch aufgeschoben und festgelegt werden, bspw. mit einer Rohrschelle.

Im Durchgangskanal 5 ist eine hülsenförmige Rohranschlussstruktur 8 eingesetzt und befestigt, die als separates Anschlusselement ausgebildet ist. Hierzu ist die Rohranschlussstruktur 8 bzw. das Anschlusselement zumindest formschlüssig optional auch stoffschlüssig in einem Aufnahmesitz 12 des Gehäuses 2 festgelegt. Man erkennt, dass die Rohranschlussstruktur 8 bzw. das Anschlusselement auf der Außenseite drei zylindrische Stufen 13 aufweist, mit denen sie in Stufen 14 des Aufnahmesitzes 12 sitzt. Der maximale Durchmesser der Rohranschlussstruktur 8 bzw. des Anschlusselements ist größer als der maximale Durchmesser der ersten Öffnung 6, jedoch kleiner als der Durchmesser der zweiten Öffnung 7. Hierdurch kann die Rohranschlussstruktur 8 aus Richtung der zweiten Öffnung 7 im Durchgangskanal 5 montiert werden. Der Durchgangskanal 5 weist im Bereich zwischen der Rohranschlussstruktur 8 und der ersten Öffnung 6 einen kleineren Durchmesser als die Rohranschlussstruktur 8 auf. Im Bereich zwischen der Rohranschlussstruktur 8 und der zweiten Öffnung 6 weist der Durchgangskanal 5 einen größeren Durchmesser als die Rohranschlussstruktur 8 auf.

Des Weiteren weist die Rohranschlussstruktur 8 einen zylindrischen Innendurchmesser auf, der über die Länge der Rohranschlussstruktur 8 eine konstante innere Querschnittsfläche ausbildet. Die minimale innere Querschnittsfläche der Rohranschlussstruktur 8 entspricht im Wesentlichen der minimalen Querschnittsfläche des Durchgangskanals 5 im Bereich zwischen der Rohranschlussstruktur 8 und der ersten Öffnung 6. Vorzugsweise liegt eine maximale Abweichung zwischen den Querschnittsflächen von 20%, weiter bevorzugt eine maximale Abweichung von 15%, und besonders bevorzugt eine maximale Abweichung von 10% vor.

Der Durchgangskanal weitet sich ausgehend von der Rohranschlussstruktur 8 in Richtung der zweiten Öffnung 7, sodass ein erster Werkzeugkern aus der zweiten Öffnung 7 herausziehbar ist. Außerdem weitet sich der Durchgangskanal 5 ausgehend von der Rohranschlussstruktur 8 in Richtung der ersten Öffnung 6, sodass ein zweiter Werkzeugkern aus der ersten Öffnung 6 herausziehbar ist. Zwischen der Rohranschlussstruktur 8 und der ersten Öffnung 6 ist im Durchgangskanal 5 eine Stoßnaht 28 ausgebildet, welche insbesondere aus der Trennlinie zwischen dem ersten und dem zweiten Werkzeugkern resultiert.

Im Bereich der Stoßnaht 28, das heißt zwischen der Rohranschlussstruktur 8 und der ersten Öffnung 6, macht der Durchgangskanal 5 eine Richtungsänderung in der Art einer 90 Grad Abwinklung. Hierdurch ist die erste Öffnung 6 quer zur zweiten Öffnung 7 sowie der Rohrstutzen 3 quer zur Rohranschlussstruktur 8 ausgerichtet.

Weiterhin ist die Rohranschlussstruktur 8 über erste Koppelmittel 9 formschlüssig mit einem ersten Ende 10 eines Innenrohrs 11 verbunden, das sich durch die zweite Öffnung 7 aus dem Gehäusekopf 4 heraus erstreckt. Der Abschnitt des Durchgangskanals 5, welcher zwischen der ersten Öffnung 6 und der Rohranschlussstruktur 8 liegt, die Rohranschlussstruktur 8 und das Innenrohr 11 bilden einen Strömungskanal für Fluid aus. Die ersten Koppelmittel 9 sind als Steckverbindung ausgebildet, wobei die Rohranschlussstruktur 8 in das Innenrohr 11 ragt. Dabei ist der maximale Außendurchmesser der Rohranschlussstruktur 8, der insbesondere außerhalb des Innenrohrs 11 liegt, größer als der Außendurchmesser des Innenrohrs 11. Optional können die ersten Koppelmittel 9 stoffschlüssig miteinander verbunden sein, zum Beispiel verklebt oder verschweißt.

Die Schnittstellen der Rohranschlussstruktur 8 sind insbesondere fluiddicht ausgeführt, sodass kein Fluid im Bereich der Rohranschlussstruktur 8 aus dem Strömungskanal in einen ringförmigen Bereich zwischen dem Innenrohr 11 und dem Gehäusekopf 4 strömen kann. Zwischen dem Innenrohr 11 und dem Gehäusekopf 4 ist insbesondere ein Ringspalt 15 ausgebildet, der in Richtung der zweiten Öffnung 7 offen ausgestaltet ist. In diesen Ringspalt 15 ist der Anschlussstutzen 104 eingeschoben.

Das Gehäuse 2 bildet auf der Innenseite des Gehäusekopfs 4 einen Dichtungssitz 16 aus, in dem ein Dichtring 17, insbesondere ein O-Ring, angeordnet ist. Der Dichtring 17 wird mit Hilfe eines Fixierrings 18 in dem Dichtungssitz 16 gehalten. Der Fixierring 18 ist in den Gehäusekopf 4 des Gehäuses 2 eingesetzt und auf der Seite der zweiten Öffnung 7 benachbart zu dem Dichtring 17 angeordnet. Vorzugsweise ist der Fixierring 18 stoffschlüssig mit dem Gehäuse 2 verbunden, insbesondere verschweißt. Sowohl bei eingesetztem Anschlussstutzen 104 als auch ohne diesen, sind der Dichtring 17 und der Fixierring 18 beabstandet von dem Innenrohr 11 positioniert. Der Anschlussstutzen 104 weist eine äußere zylindrische Dichtfläche 105 auf, die mit dem Dichtring 17 eine Dichtung ausbildet.

Ferner erkennt man, dass das Gehäuse 2 auf der Innenseite des Gehäusekopfs 4 vor und hinter dem Dichtungssitz 16 jeweils eine zylindrische Zentrierstufe 19, 20 aufweist. Diese beiden zylindrischen Zentrierstufen 19, 20 korrespondieren mit zwei Zentrierstufen 108, 109, die auf der Außenseite des Anschlussstutzens 104 ausgebildet sind.

Das Innenrohr 11 verläuft gerade und verfügt über ein zweites Ende 21, an dem eine Verteilerkappe 22 angeordnet ist. Die Verteilerkappe 22 lenkt die Strömungsrichtung des Strömungskanals im Bereich des zweiten Endes 21 des Innenrohrs 11 um. Die Verteilerkappe 22 hat hierzu über den Umfang verteilte Austrittslöcher 23 und eine stirnseitige Prallplatte 24. Damit wird ausströmendes Fluid sternförmig in verschiedene Richtungen gelenkt.

Die Verteilerkappe 22 ist über zweite Koppelmittel 25 formschlüssig mit dem zweiten Ende 21 des Innenrohrs 11 verbunden. Insbesondere bilden die zweiten Koppelmittel 25 eine Steckverbindung aus, wobei die Verteilerkappe 22 in das Innenrohr 11 ragt.

Im Bereich des Gehäusekopfs 4 erkennt man am Gehäuse 2 ein Verschlussmittel 26, nämlich einen Sicherungsbügel, zur Festlegung des Gehäusekopfs 4 an dem Anschlussstutzen 104. Der Sicherungsbügel ist durch Rippen bzw. Vorsprünge und Freimachungen auf der Außenseite des Gehäusekopfs 4 positioniert, wobei Durchbrüche, insbesondere schlitzförmige Durchbrüche, im Gehäusekopf 4 ausgebildet sind, durch die der Sicherungsbügel in das Innere des Gehäusekopfs 4 ragen kann. Hier greift der Sicherungsbügel nach der Montage auf dem Anschlussstutzen 104 in eine korrespondierende, vorzugsweise umlaufende, Sicherungsnut in dem Anschlussstutzen 104 ein.

Das Innenrohr 11 besteht zumindest im Wesentlichen aus PA (Polyamid) und der Anschlussstutzen 104 aus PP (Polypropylen). Das Gehäuse 2 besteht zumindest im Wesentlichen aus PA (Polyamid). Optional kann auch die Rohranschlussstruktur 8 und/oder die Verteilerkappe 22 zumindest im Wesentlichen aus PA (Polyamid) bestehen. Der Sicherungsbügel kann aus Kunststoff oder Metall bestehen.

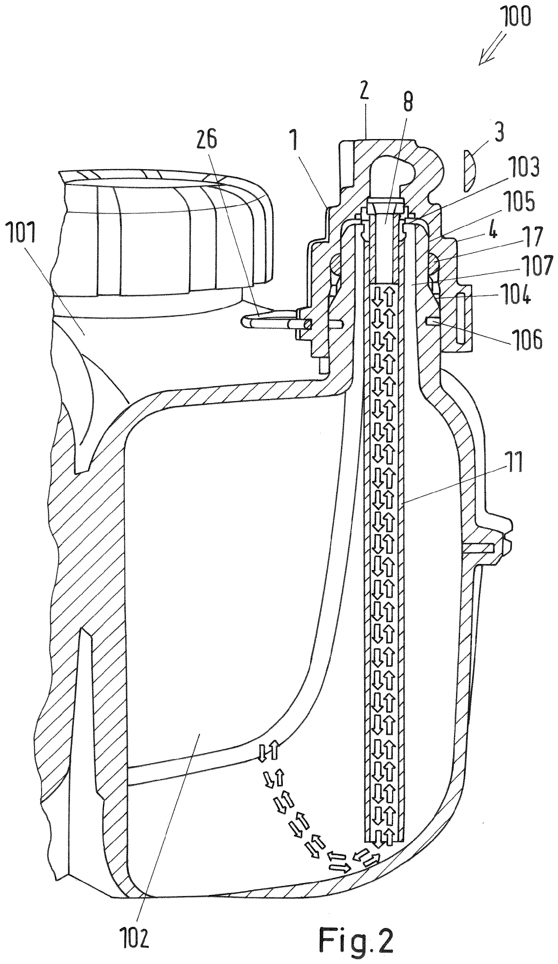

**Fig. 2** zeigt eine perspektivische Schnittansicht eines Behälters 100 mit einer Leitungskupplung 1 gemäß Fig. 1. Allerdings ist bei der Leitungskupplung 1 nach Fig. 2 keine Verteilerkappe am zweiten Ende des Innenrohrs 11 vorgesehen. Die Bauteile und Ausgestaltungen der Leitungskupplung 1 entsprechen also mit der genannten Ausnahme denjenigen, die zu Fig. 1 beschrieben sind. Mit Bezugsziffern sind in Fig. 2 lediglich das Gehäuse 2, der Rohrstutzen 3, der Gehäusekopf 4, das Innenrohr 11 und der Sicherungsbügel bzw. das Verschlussmittel 26 versehen.

Der Behälter 100 weist ein Behältergehäuse 101 auf, das einen Behälterhohlraum 102 und eine geodätisch oben angeordnete Behälteröffnung 103 ausbildet. Die Behälteröffnung 103 ist vor allem von einem Anschlussstutzen 104 gemäß Fig. 1 ausgebildet, der erkennbar ein nach außen hervorstehender Teil des Behältergehäuse 101 ist. Mit dem Gehäusekopf 4 der Leitungskupplung 1 ist die Behälteröffnung 103 abdeckt, wobei das Innenrohr 11 der Leitungskupplung 1 durch den Anschlussstutzen 104 vertikal nach unten und in den Behälterhohlraum 102 hineinragt. Der Anschlussstutzen 104 ragt dabei in den Ringspalt zwischen dem Gehäusekopf 4 und dem Innenrohr 11. Zwischen dem Innenrohr 11 und dem Anschlussstutzen 104 verbleibt jedoch ein Ringspalt 107. Insbesondere berühren sich das Innenrohr 11 und der Anschlussstutzen 104 an keiner Stelle.

Wie man sieht, weist der Anschlussstutzen 104 ein Verschlussmittel 106 in Form einer umlaufenden Außennut auf. Diese korrespondiert mit dem Verschlussmittel 26 bzw. dem Sicherungsbügel der Leitungskupplung 1. Hierdurch ist die Leitungskupplung 1 an dem Anschlussstutzen 104 festgelegt, insbesondere axialfest und drehbar.

Bei dem Behälter 100 handelt es sich insbesondere um einen Ausgleichbehälter. Bei thermisch bedingtem Überdruck auf Seiten der ersten Öffnung 6 strömt heißes Fluid in den Behälterhohlraum 102. Vom zweiten Ende des Innenrohrs 11 steigt das heiße Fluid im Behälterhohlraum 102 auf, wobei es abkühlt, sich mit kühlerem Fluid vermischt und soweit keine Strömungen vorliegen durch natürliche Konvektion einschichtet. Wenn der Druck im Bereich der ersten Öffnung 6 sinkt, drückt Luft, die im Behälterhohlraum 102 komprimiert ist, oder zieht Unterdruck auf Seiten der ersten Öffnung 6 Fluid aus dem unteren Bereich des Behälterhohlraums 102 in das zweite Ende des Innenrohrs 11. Hierdurch kann das kältest mögliche Fluid aus dem Behälterhohlraum 102 zur ersten Öffnung 6 geleitet werden.

Die Erfindung ist nicht auf eine der vorbeschriebenen Ausführungsformen beschränkt, sondern in vielfältiger Weise im Rahmen der Ansprüche abwandelbar.

**Bezugszeichenliste**

| | | | |
|---|---|---|---|
| 1 | Leitungskupplung | 21 | zweites Ende |
| 2 | Gehäuse | 22 | Verteilerkappe |
| 3 | Rohrstutzen | 23 | Austrittsloch |
| 4 | Gehäusekopf | 24 | Prallplatte |
| 5 | Durchgangskanal | 25 | zweite Koppelmittel |
| 6 | erste Öffnung | 26 | Verschlussmittel |
| 7 | zweite Öffnung | 27 | Befestigungsprofil |
| 8 | Rohranschlussstruktur | 28 | Stoßnaht |
| 9 | erste Koppelmittel | | |
| 10 | erstes Ende | 100 | Behälter |
| 11 | Innenrohr | 101 | Behältergehäuse |
| 12 | Aufnahmesitz | 102 | Behälterhohlraum |
| 13 | Stufe | 103 | Behälteröffnung |
| 14 | Stufe | 104 | Anschlussstutzen |
| 15 | Ringspalt | 105 | Dichtfläche |
| 16 | Dichtungssitz | 106 | Verschlussmittel |
| 17 | Dichtring | 107 | Ringspalt |
| 18 | Fixierrings | 108 | Zentrierstufe |
| 19 | Zentrierstufe | 109 | Zentrierstufe |
| 20 | Zentrierstufe | | |

## Patentansprüche

1. Leitungskupplung (1) mit einem Gehäuse (2), das einen Rohrstutzen (3) und einen Gehäusekopf (4) aufweist, wobei sich ein Durchgangskanal (5) von einer ersten Öffnung (6), die vom Rohrstutzen (3) ausgebildet ist, zu einer zweiten Öffnung (7), die vom Gehäusekopf (4) ausgebildet ist, erstreckt, wobei im Durchgangskanal (5) eine Rohranschlussstruktur (8) angeordnet ist, wobei die Rohranschlussstruktur (8) über erste Koppelmittel (9) formschlüssig mit einem ersten Ende (10) eines Innenrohrs (11) der Leitungskupplung (1) verbunden ist, das sich durch die zweite Öffnung (7) aus dem Gehäusekopf (4) heraus erstreckt, und wobei der Abschnitt des Durchgangskanals (5) zwischen der ersten Öffnung (6) und der Rohranschlussstruktur (8) sowie das Innenrohr (11) einen Strömungskanal für Fluid ausbilden, wobei zwischen dem Innenrohr (11) und dem Gehäusekopf (4) ein Ringspalt (15) ausgebildet ist, der in Richtung der zweiten Öffnung (7) offen ausgestaltet ist, wobei das Gehäuse (2) einteilig hergestellt ist, wobei die Querschnittsfläche der zweiten Öffnung (7) um wenigstens das Zweifache größer als die Querschnittsfläche der ersten Öffnung (6) ist, und wobei die Rohranschlussstruktur (8) durch ein Anschlusselement ausgebildet ist, das formschlüssig, optional auch stoffschlüssig, in einem Aufnahmesitz (12) des Gehäuses (2) festgelegt ist, **dadurch gekennzeichnet, dass** das die Rohranschlussstruktur (8) ausbildende Anschlusselement auf der Außenseite wenigstens zwei zylindrische Stufen (13) aufweist, mit denen das Anschlusselement (8) in Stufen (14) des Aufnahmesitzes (12) sitzt.

2. Leitungskupplung (1) gemäß Anspruch 1, **dadurch gekennzeichnet, dass** die Rohranschlussstruktur (8) hülsenförmig ausgebildet ist.

3. Leitungskupplung (1) gemäß einem der Ansprüche 1 oder 2, **dadurch gekennzeichnet, dass** das die Rohranschlussstruktur (8) ausbildende Anschlusselement auf der Außenseite wenigstens drei zylindrische Stufen (13) aufweist, mit denen das Anschlusselement (8) in Stufen (14) des Aufnahmesitzes (12) sitzt.

4. Leitungskupplung (1) gemäß einem der vorhergehenden Ansprüche, **dadurch gekennzeichnet, dass** der maximale Außendurchmesser des Anschlusselements größer ist als der Außendurchmesser des Innenrohrs (11).

5. Leitungskupplung (1) gemäß einem der vorhergehenden Ansprüche, **dadurch gekennzeichnet, dass** der zwischen dem Innenrohr (11) und dem Gehäusekopf (4) ausgebildete Ringspalt (15) zum Einschieben eines Anschlussstutzens (104) ausgebildet ist.

6. Leitungskupplung (1) gemäß einem der vorhergehenden Ansprüche, **dadurch gekennzeichnet, dass** das Gehäuse (2) auf der Innenseite des Gehäusekopfs (4) einen Dichtungssitz (16) ausbildet, in dem ein Dichtring (17) angeordnet ist.

7. Leitungskupplung (1) gemäß Anspruch 6, **dadurch gekennzeichnet, dass** der Dichtring (17) mittels eines Fixierrings (18), der in den Gehäusekopf (4) des Gehäuses (2) eingesetzt ist, in dem Dichtungssitz (16) gehalten wird.

8. Leitungskupplung (1) gemäß einem der Ansprüche 6 oder 7, **dadurch gekennzeichnet, dass** das Gehäuse (2) auf der Innenseite des Gehäusekopfs (4) vor und/oder hinter dem Dichtungssitz (16) wenigstens eine zylindrische Zentrierstufe (19, 20) aufweist.

9. Leitungskupplung (1) gemäß einem der vorhergehenden Ansprüche, **dadurch gekennzeichnet, dass** das Innenrohr (11) ein zweites Ende (21) aufweist, an dem eine Verteilerkappe (22) angeordnet ist, welche die Strömungsrichtung im Bereich des zweiten Endes (21) des Innenrohrs (11) wenigstens teilweise umlenkt.

10. Leitungskupplung (1) gemäß Anspruch 9, **dadurch gekennzeichnet, dass** das zweite Ende (21) des Innenrohrs (11) über zweite Koppelmittel (25) formschlüssig mit der Verteilerkappe (22) verbunden ist.

11. Leitungskupplung (1) gemäß einem der vorhergehenden Ansprüche, **dadurch gekennzeichnet, dass** am Gehäuse (2) Verschlussmittel (26) zur Festlegung des Gehäusekopfs (4) angeordnet sind.

12. Leitungskupplung (1) gemäß einem der vorhergehenden Ansprüche, **dadurch gekennzeichnet, dass** sich der Durchgangskanal (5) ausgehend von der Rohranschlussstruktur (8) in Richtung der zweiten Öffnung (7) ausschließlich aufweitet.

13. Leitungskupplung (1) gemäß einem der vorhergehenden Ansprüche, **dadurch gekennzeichnet, dass** sich der Durchgangskanal (5) ausgehend von der Rohranschlussstruktur (8) in Richtung der ersten Öffnung (6) ausschließlich aufweitet.

14. Leitungskupplung (1) gemäß einem der vorhergehenden Ansprüche, **dadurch gekennzeichnet, dass** zwischen der Rohranschlussstruktur (8) und der ersten Öffnung (6) im Durchgangskanal (5) eine Stoßnaht (28) ausgebildet ist.

15. **Behälter** (100) mit einem Behältergehäuse (101), das einen Behälterhohlraum (102) und eine Behälteröffnung (103) ausbildet, wobei die Behälteröffnung (103) von einem nach außen hervorstehenden Anschlussstutzen (104) ausgebildet ist, und mit einer Leitungskupplung (1) nach einem der vorhergehenden Ansprüche, wobei der Gehäusekopf (4) der Leitungskupplung (1) die Behälteröffnung (103) abdeckt, und wobei das Innenrohr (11) der Leitungskupplung (1) durch den Anschlussstutzen (104) des Behältergehäuses (101) in den Behälterhohlraum (102) hineinragt.

16. Behälter (100) gemäß Anspruch 15, **dadurch gekennzeichnet, dass** der Anschlussstutzen (104) eine äußere zylindrische Dichtfläche (105) aufweist, die mit einem Dichtring (17) gemäß Anspruch 6 eine Dichtung ausbildet.

17. Behälter (100) gemäß einem der Ansprüche 15 oder 16, **dadurch gekennzeichnet, dass** der Anschlussstutzen (104) Verschlussmittel (106) aufweist, die mit Verschlussmitteln (26) des Gehäuses (2) gemäß Anspruch 11 der Leitungskupplung (1) derart korrespondieren, dass der Gehäusekopf (4) an dem Anschlussstutzen (104) festgelegt ist.

18. Behälter (100) gemäß einem der Ansprüche 15 bis 17, **dadurch gekennzeichnet, dass** zwischen dem Innenrohr (11) und dem Anschlussstutzen (104) ein Ringspalt (107) ausgebildet ist.

19. Behälter (100) gemäß einem der Ansprüche 15 bis 18, **dadurch gekennzeichnet, dass** der Anschlussstutzen (104) außenseitige wenigstens eine zylindrische Zentrierstufe (108, 109) aufweist, die mit einer zylindrischen Zentrierstufe (19, 20) des Gehäusekopfs (4) gemäß Anspruch 8 korrespondiert.

## Claims

1. Line coupling (1) with a housing (2) which has a tube connection piece (3) and a housing head (4), wherein a passage duct (5) extends from a first opening (6), which is formed by the tube connection piece (3), to a second opening (7), which is formed by the housing head (4), wherein a tube connection structure (8) is arranged in the passage duct (5), wherein the tube connection structure (8) is connected in a form-fitting manner via first coupling means (9) to a first end (10) of an inner tube (11) of the line coupling (1), which extends out of the housing head (4) through the second opening (7), and wherein the section of the passage duct (5) between the first opening (6) and the tube connection structure (8) and the inner tube (11) form a flow duct for fluid, wherein an annular gap (15) is formed between the inner rube (11) and the housing head (4) which is designed to be open in the direction of the second opening (7), wherein the housing (2) is produced in one piece, wherein the cross-sectional area of the second opening (7) is at least twice as large as the cross-sectional area of the first opening (6) and wherein the tube connection structure (8) is formed by a connection element which is secured in a form-fitting manner, optically also in a material-bonded manner, in a receiving seat (12) of the housing (2), **characterised in that** the connection element forming the tube connection structure (8) has at least two cylindrical steps (13) on the outside, by means of which the connection element (8) sits in steps (14) of the receiving seat (12).

2. Line coupling (1) according to claim 1, **characterised in that** the tube connection structure (8) is designed to be sleeve-like.

3. Line coupling (1) according to any of claims 1 or 2, **characterised in that** the connection element forming the tube connection structure (8) has, on the outer side, at least three cylindrical steps (13), by means of which the connection element (8) is seated in steps (14) of the receiving seat (12).

4. Line coupling (1) according to any of the preceding claims, **characterised in that** the maximum outer diameter of the connection element is greater than the outer diameter of the inner tube (11).

5. Line coupling (1) according to any of the preceding claims, **characterised in that** the annular gap (15) formed between the inner tube (11) and the housing head (4) is designed for inserting a connection piece (104).

6. Line coupling (1) according to any of the preceding claims, **characterised in that** the housing (2) forms, on the inner side of the housing head (4), a seal seat (16) in which a sealing ring (17) is arranged.

7. Line coupling (1) according to claim 6, **characterised in that** the sealing ring (17) is retained in the seal seat (16) by means of a fixing ring (18) which is inserted into the housing head (4) of the housing (2).

8. Line coupling (1) according to any of claims 6 or 7, **characterised in that** the on the inner side of the housing head (4) the housing (2) has, in front of and/or behind the seal seat (16), at least one cylindrical centring step (19, 20).

9. Line coupling (1) according to any of the preceding claims, **characterised in that** the inner tube (11) has a second end (21) on which there is arranged a distributor cap (22) which at least partially deflects the flow direction in the region of the second end (21) of the inner tube (11).

10. Line coupling (1) according to claim 9, **characterised in that** the second end (21) of the inner tube (11) is connected in a form-fitting manner to the distributor cap (22) via second coupling means (25).

11. Line coupling (1) according to any of the preceding claims, **characterised in that** closure means (26) for fixing the housing head (4) are arranged on the housing (2).

12. Line coupling (1) according to any of the preceding claims, **characterised in that** the passage duct (5) widens exclusively in the direction of the second opening (7) from the tube connection structure (8).

13. Line coupling (1) according to any of the preceding claims, **characterised in that** the passage duct (5) widens exclusively in the direction of the first opening (6) from the tube connection structure (8).

14. Line coupling (1) according to any of the preceding claims, **characterised in that** a butt seam (28) is formed in the passage duct (5) between the tube connection structure (8) and the first opening (6).

15. **Container** (100) having a container housing (101) which forms a container cavity (102) and a container opening (103), wherein the container opening (103) is formed by an outwardly projecting connection piece (104), and having a line coupling (1) according to any of the preceding claims, wherein the housing head (4) of the line coupling (1) covers the container opening (103), and wherein the inner tube (11) of the line coupling (1) projects into the container cavity (102) through the connection piece (104) of the container housing (101).

16. Container (100) according to claim 15, **characterised in that** the connection piece (104) has an outer cylindrical sealing surface (105) which, together with a sealing ring (17) according to claim 6, forms a seal.

17. Container according (100) according to any of claims 15 or 16, **characterised in that** the connection piece (104) has closure means (106) which correspond with closure means (26) of the housing (2) according to claim 11 of the line coupling (1), such that the housing head (4) is fixed to the connection piece (104).

18. Container (100) according to any of claims 15 to 17, **characterised in that** an annular gap (107) is formed between the inner tube (11) and the connection piece (104).

19. Container (100) according to any of claims 15 to 18, **characterised in that** the connection piece (104) has, on the outside, at least one cylindrical centring step (108, 109), which corresponds with a cylindrical centring step (19, 20) of the housing head (4) according to claim 8.

## Revendications

1. Accouplement de conduites (1) avec un boîtier (2), qui présente une tubulure (3) et une tête de boîtier (4), dans lequel un canal de passage (5) s'étend d'une première ouverture (6), qui est réalisée par la tubulure (3), à une seconde ouverture (7), qui est réalisée par la tête de boîtier (4), dans lequel une structure de raccordement de tube (8) est disposée dans le canal de passage (5), dans lequel la structure de raccordement de tube (8) est reliée par coopération de formes par l'intermédiaire de premiers moyens d'accouplement (9) à une première extrémité (10) d'un tube intérieur (11) de l'accouplement de conduites (1), qui s'étend à travers la seconde ouverture (7) à l'extérieur de la tête de boîtier (4), et dans lequel la section du canal de passage (5) entre la première ouverture (6) et la structure de raccordement de tube (8) ainsi que le tube intérieur (11) réalisent un canal d'écoulement pour du fluide, dans lequel une fente annulaire (15), qui est conçue de manière ouverte en direction de la seconde ouverture (7), est réalisée entre le tube intérieur (11) et la tête de boîtier (4), dans lequel le boîtier (2) est fabriqué d'une seule pièce, dans lequel la surface de section transversale de la seconde ouverture (7) est au moins deux fois plus grande que la surface de section transversale de la première ouverture (6), et dans lequel la structure de raccordement de tube (8) est réalisée par un élément de raccordement, qui est fixé par coopération de formes, éventuellement également par liaison de matière, dans un siège de réception (12) du boîtier (2), **caractérisé en ce que** l'élément de raccordement réalisant la structure de raccordement de tube (8) présente sur la face extérieure au moins deux étages (13) cylindriques, avec lesquels l'élément de raccordement (8) repose dans des étages (14) du siège de réception (12).

2. Accouplement de conduites (1) selon la revendication 1, **caractérisé en ce que** la structure de raccordement de tube (8) est réalisée en forme de manchon.

3. Accouplement de conduites (1) selon l'une quelconque des revendications 1 ou 2, **caractérisé en ce que** l'élément de raccordement réalisant la structure de raccordement de tube (8) présente sur la face extérieure au moins trois étages (13) cylindriques, avec lesquels l'élément de raccordement (8) repose dans des étages (14) du siège de réception (12).

4. Accouplement de conduites (1) selon l'une quelconque des revendications précédentes, **caractérisé en ce que** le diamètre extérieur maximal de l'élément de raccordement est plus grand que le diamètre extérieur du tube intérieur (11).

5. Accouplement de conduites (1) selon l'une quelconque des revendications précédentes, **caractérisé en ce que** la fente annulaire (15) réalisée entre le tube intérieur (11) et la tête de boîtier (4) est réalisée pour l'insertion d'une tubulure de raccordement (104).

6. Accouplement de conduites (1) selon l'une quelconque des revendications précédentes, **caractérisé en ce que** le boîtier (2) réalise sur la face intérieure de la tête de boîtier (4) un siège d'étanchéité (16), dans lequel est disposée une bague d'étanchéité (17).

7. Accouplement de conduites (1) selon la revendication 6, **caractérisé en ce que** la bague d'étanchéité (17) est retenue dans le siège d'étanchéité (16) au moyen d'une bague de fixation (18), qui est insérée dans la tête de boîtier (4) du boîtier (2).

8. Accouplement de conduites (1) selon l'une quelconque des revendications 6 ou 7, **caractérisé en ce que** le boîtier (2) présente sur la face intérieure de la tête de boîtier (4) devant et/ou derrière le siège d'étanchéité (16) au moins un étage de centrage cylindrique (19, 20).

9. Accouplement de conduites (1) selon l'une quelconque des revendications précédentes, **caractérisé en ce que** le tube intérieur (11) présente une seconde extrémité (21), sur laquelle est disposé un chapeau de distributeur (22), lequel dévie au moins en partie le sens d'écoulement dans la zone de la seconde extrémité (21) du tube intérieur (11).

10. Accouplement de conduites (1) selon la revendication 9, **caractérisé en ce que** la seconde extrémité (21) du tube intérieur (11) est reliée par coopération de formes au chapeau de distributeur (22) par l'intermédiaire de seconds moyens d'accouplement (25).

11. Accouplement de conduites (1) selon l'une quelconque des revendications précédentes, **caractérisé en ce que** des moyens de fermeture (26) pour la fixation de la tête de boîtier (4) sont disposés sur le boîtier (2).

12. Accouplement de conduites (1) selon l'une quelconque des revendications précédentes, **caractérisé en ce que** le canal de passage (5) s'élargit exclusivement à partir de la structure de raccordement de tube (8) en direction de la seconde ouverture (7).

13. Accouplement de conduites (1) selon l'une quelconque des revendications précédentes, **caractérisé en ce que** le canal de passage (5) s'élargit exclusivement à partir de la structure de raccordement de tube (8) en direction de la première ouverture (6).

14. Accouplement de conduites (1) selon l'une quelconque des revendications précédentes, **caractérisé en ce qu'**une soudure bout à bout (28) est réalisée entre la structure de raccordement de tube (8) et la première ouverture (6) dans le canal de passage (5).

15. **Récipient** (100) avec un boîtier de récipient (101), qui réalise une cavité de récipient (102) et une ouverture de récipient (103), dans lequel l'ouverture de récipient (103) est réalisée par une tubulure de raccordement (104) faisant saillie vers l'extérieur, et avec un accouplement de conduites (1) selon l'une quelconque des revendications précédentes, dans lequel la tête de boîtier (4) de l'accouplement de conduites (1) recouvre l'ouverture de récipient (103), et dans lequel le tube intérieur (11) de l'accouplement de conduites (1) fait saillie à travers la tubulure de raccordement (104) du boîtier de récipient (101) à l'intérieur de la cavité de récipient (102).

16. Récipient (100) selon la revendication 15, **caractérisé en ce que** la tubulure de raccordement (104) présente une surface d'étanchéité (105) cylindrique extérieure, qui réalise un joint d'étanchéité avec une bague d'étanchéité (17) selon la revendication 6.

17. Récipient (100) selon l'une quelconque des revendications 15 ou 16, **caractérisé en ce que** la tubulure de raccordement (104) présente des moyens de fermeture (106), qui sont en correspondance avec des moyens de fermeture (26) du boîtier (2) selon la revendication 11 de l'accouplement de conduites (1), de telle sorte que la tête de boîtier (4) est fixée sur la tubulure de raccordement (104).

18. Récipient (100) selon l'une quelconque des revendications 15 à 17, **caractérisé en ce qu'une** fente annulaire (107) est réalisée entre le tube intérieur (11) et la tubulure de raccordement (104).

19. Récipient (100) selon l'une quelconque des revendications 15 à 18, **caractérisé en ce que** la tubulure de raccordement (104) présente côté extérieur au moins un étage de centrage cylindrique (108, 109), qui est en correspondance avec un étage de centrage cylindrique (19, 20) de la tête de boîtier (4) selon la revendication 8.
